# EUROPEAN PATENT SPECIFICATION

(11) **EP 2 712 795 B1**
(45) Date of publication and mention of the grant of the patent: **05.08.2015**
(21) Application number: 12186596.8
(22) Date of filing: 28.09.2012
(51) Int. Cl.: B62J 17/02, F02M 35/16, F02M 35/10

(54) **Straddle-type vehicle**
Fahrzeug mit Sattel
Véhicule de type à enfourcher

(43) Date of publication of application: 02.04.2014
(73) Proprietor: YAMAHA MOTOR CO., LTD., Iwata-shi Shizuoka 438-8501 (JP)
(72) Inventor: Galimberti, Stefano, 20050 Gerno di Lesmo (MI) (IT)
(74) Representative: Grünecker Patent- und Rechtsanwälte PartG mbB

(56) References cited:
- EP-A1- 2 258 611
- EP-A1- 2 543 581
- JP-A- 4 133 887
- US-A- 4 709 774
- US-A1- 2009 108 629

## Description

The present invention relates to a straddle-type vehicle, in particular a scooter-type motorcycle, wherein an air inlet is formed in a front cover assembly.

Such a vehicle is known from WO 2009/122800. A vehicle according to the preamble of claim 1 is known from US 4 709 774 A.

Generally, scooter-type motorcycles such as that known from WO 2009/122800 have a structure in which a front fork is supported steerably to the left and right by a head pipe located at a front end of a main body frame, wherein said front fork has a front wheel and steering handlebars placed at a bottom end and a top end thereof, respectively. A front cover assembly is often disposed to cover at least part of the front fork and/or at least part of the head pipe. Such a front cover assembly not only provides initial protection to a rider's legs from rain, spray, road dust, debris and the like, but it also improves the aerodynamics and the aesthetics of the scooter-type motorcycle.

Often, the front cover assembly is formed with an air inlet to allow the entry of air into a space formed within said front cover assembly and surrounding at least part of the front fork and/or at least part of the head pipe. This air that enters through the air inlet acts as a cooling fluid for in-vehicle parts, such as a radiator, various electronics, etc, located in this inner space within the front cover assembly. Accordingly, so as to ensure that the cooling air supplied by the air inlet can sufficiently cool the in-vehicle parts of such a scooter-type motorcycle, the headlight is installed in a handlebar assembly, separate from the front cover assembly. This is the case for the scooter-type motorcycle known from WO 2009/122800.

Recently, there has been a trend towards locating the headlights of scooter-type motorcycles at lower and lower points of the motorcycle. This enables the headlight to more easily provide an even field of illumination. However, locating the headlight of a scooter-type motorcycle at a lower point generally means moving the headlight from the handlebar assembly to the front cover assembly. This has detrimental consequences with regards to the efficiency of the cooling carried out by the cooling air able to enter the inner space behind the front cover assembly. Accordingly, the present invention is made in view of the foregoing circumstances, and it is an objective of the present invention to provide a straddle-type vehicle which is able to efficiently cool in-vehicle parts located within a front cover assembly, even when a headlight is provided in said front cover assembly.

According to the present invention, such an objective is achieved by the straddle-type vehicle of claim 1. Specifically, a straddle-type vehicle of the present invention comprises: a front cover assembly comprising a first front cover and a second front cover disposed rearward of the first front cover; and a headlight installed in the front cover assembly. A first air inlet is formed in the first front cover; a second air inlet is formed in the second front cover, the second air inlet having a second front opening and a second rear opening for directing cooling air to in-vehicle parts; and when seen in a front view, the first air inlet has a larger opening area than the second rear opening.

By forming the first and second air inlets such that the first air inlet has a larger opening area than the second rear opening, the opening area of the air inlets is reduced from entry at the first air inlet to exit at the second rear opening of the second air inlet. Accordingly, the flow of cooling air accelerates between the time it enters the first air inlet and the time it exits the second rear opening of the second air inlet due to this reduction in opening area, and thus the flow velocity of the cooling air directed to the in-vehicle parts is increased. Consequently, as the air flow over said in-vehicle parts is increased, they can be cooled more efficiently even though a headlight is provided in the front cover assembly.

Preferably, the straddle-type vehicle further comprises a head pipe, wherein the first front cover is preferably arranged in front of the head pipe and the second front cover is preferably arranged between the first front cover and the head pipe. As such, the volume of space available within the front cover assembly can be optimized.

The first air inlet has a first front opening and a first rear opening, and the first front opening preferably has a larger area than the first rear opening. Hence, the acceleration of the cooling air flow can already start to occur within the first air inlet.

Further, the first rear opening preferably has a larger area than the second front opening. Accordingly, the acceleration of the cooling air flow can continue as the cooling air flows from the first air inlet to the second air inlet.

Still further, the second front opening has a larger area than the second rear opening. Hence, the acceleration of the cooling air flow can continue to occur up until the cooling air flows out of the second air inlet.

Yet further still, the larger areas are due to the openings being wider in the lateral direction and/or vertical direction. Accordingly, the cooling air flow accelerates by being directed in a lateral and/or vertical direction.

Preferably, the second air inlet comprises a channel portion extending from the second front opening to the second rear opening. Hence, the acceleration of the cooling air flow occurs over the entire length of the second air inlet.

Still further, the channel portion comprises sidewalls that are angled inward from the second front opening to the second rear opening. Accordingly, the cooling air flow accelerates by being directed in a lateral direction, and can be focused towards the lateral center of the straddle-type vehicle.

Yet further still, the channel portion comprises a grill portion having at least one grill fin extending in a lateral direction across the second air inlet, preferably inclined downward towards the centre of the straddle-type vehicle. Accordingly, any debris found in the cooling air flow can be prevented from entering the front cover assembly and damaging the in-vehicle parts.

Preferably, the at least one grill portion further extends in a longitudinal direction of the straddle-type vehicle, and at least part of the at least one grill fin is inclined downwards towards the rear from the horizontal plane. Accordingly, the cooling air flow can be accurately deflected towards the in-vehicle parts.

The headlight is installed in the first front cover. Thus, the second front cover can be produced with a smaller size.

More preferably, the in-vehicle parts comprise a radiator arranged within the front cover assembly, behind the first and second air inlets and preferably in front of the head pipe. Accordingly, the radiator of the straddle-type vehicle can be efficiently cooled whilst utilizing the optimized space within the front cover assembly.

Further, the second rear opening is preferably wider than the radiator in the lateral direction. Hence, the radiator is exposed to the flow of cooling air across its entire width. Still further, the first front opening preferably comprises a pair of first left and right front openings disposed on the left and right lateral sides of the straddle-type vehicle; and the first rear opening preferably comprises a pair of first left and right rear openings disposed on the left and right lateral sides of the straddle-type vehicle, behind the first left and right front openings, respectively. Accordingly, a sufficient opening area of the first air inlet can be provided, without structurally weakening the first front cover.

Moreover, according to a preferred embodiment, the second front opening preferably comprises a pair of second left and right front openings disposed on the left and right lateral sides of the straddle-type vehicle; and the second rear opening preferably comprises a pair of second left and right rear openings disposed on the left and right lateral sides of the straddle-type vehicle, behind the second left and right front openings, respectively. Accordingly, a sufficient opening area of the second air inlet can be provided, without structurally weakening the second front cover.

In the following, the present invention is explained in greater detail with respect to an embodiment thereof in conjunction with the accompanying drawings, wherein:
- Figure 1:: is a side view of a scooter-type motorcycle (straddle-type vehicle) according to an embodiment of the present invention;
- Figure 2:: is a front view of the front cover assembly according to the embodiment of the present invention;
- Figure 3:: is a top view of the front cover assembly depicted in Figure 2;
- Figure 4:: is a side view of the front cover assembly depicted in Figure 2;
- Figure 5:: is a detailed front view of the second front cover of the front cover assembly depicted in Figure 2, and
- Figure 6:: is a horizontal cross-section of the front cover assembly of the present invention taken along the line A-A in Figure 5, and including both the first front cover and the second front cover.

Among others, the following reference signs are used in the Figures:
- 1:: Scooter-type motorcycle (straddle-type vehicle)
- 2a:: Front cover assembly
- 10:: First front cover
- 11:: Second front cover
- 12:: First air inlet
- 12a:: First front opening
- 12b:: First rear opening
- 13:: Second air inlet
- 13a:: Second front opening
- 13b:: Second rear opening
- 14:: Channel portion
- 14a:: Channel portion sidewalls (second outer sidewalls)
- 14b:: Channel portion grill
- 15:: Radiator (in-vehicle parts)

One embodiment will be described below with reference to the accompanying drawings.

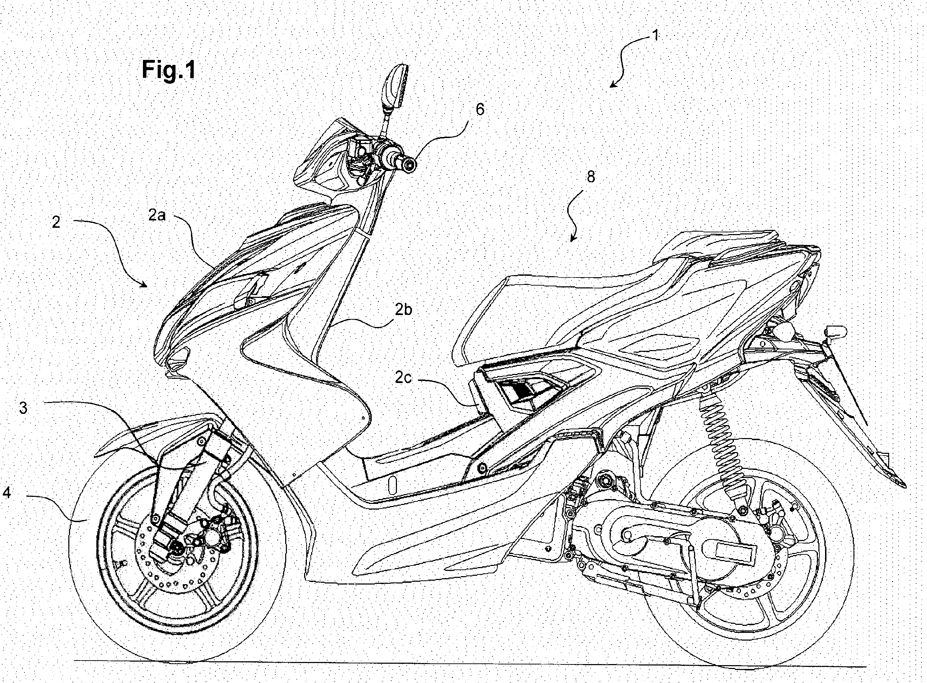

Figures 1 to 5 illustrate a scooter-type motorcycle (straddle-type vehicle), according to one embodiment. Therein, in general, a straddle-type vehicle is a vehicle having a body frame and a seat on which a rider can be seated straddling the body frame when being seated. Unless otherwise specified, the term "right", "left", "front", "rear", "up" and "down" used in this embodiment refer to the right, left, front, rear, up and down when viewed by a rider seated on the seat.

In these Figures, a reference numeral 1 designates a scooter-type motorcycle. The motorcycle 1 has: an under-bone type main body frame (not shown); a front fork 3, which is supported steerably to the left and right by a head pipe (not shown) located at a front end of the main body frame, and which places a front wheel 4 and the steering handlebars 6 at a bottom end and a top end of the front fork 3, respectively; an engine unit 7, which is mounted to the main body frame at its middle part in the front-rear direction, and which places a rear wheel 5 at a rear end of the engine unit 7; and a straddle seat 8 for a rider mounted to the main body frame above the engine unit 7.

The main body frame is provided with: a front frame, having left and right front frame sections extending from the head pipe obliquely downwards to the rear; and a rear frame having left and right rear frame sections extending from the left and right front frame sections obliquely upward below the straddle seat 8 to the rear.

The main body frame is enclosed with a resinous body cover 2. The body cover 2 has: a front cover assembly 2a for covering the front, left and right sides of the front fork 3; a leg shield 2b, located rearward from the front cover for covering the front of the rider's legs; and a main body cover 2c for covering the rear frame beneath the straddle seat 8.

The front cover assembly 2a comprises a first front cover 10 and a second front cover 11 disposed rearward of the first front cover 10, and a headlight 9 is installed in the front cover assembly 2a. Both the first and second front covers are made from a resinous material and can be formed by injection molding or the like.

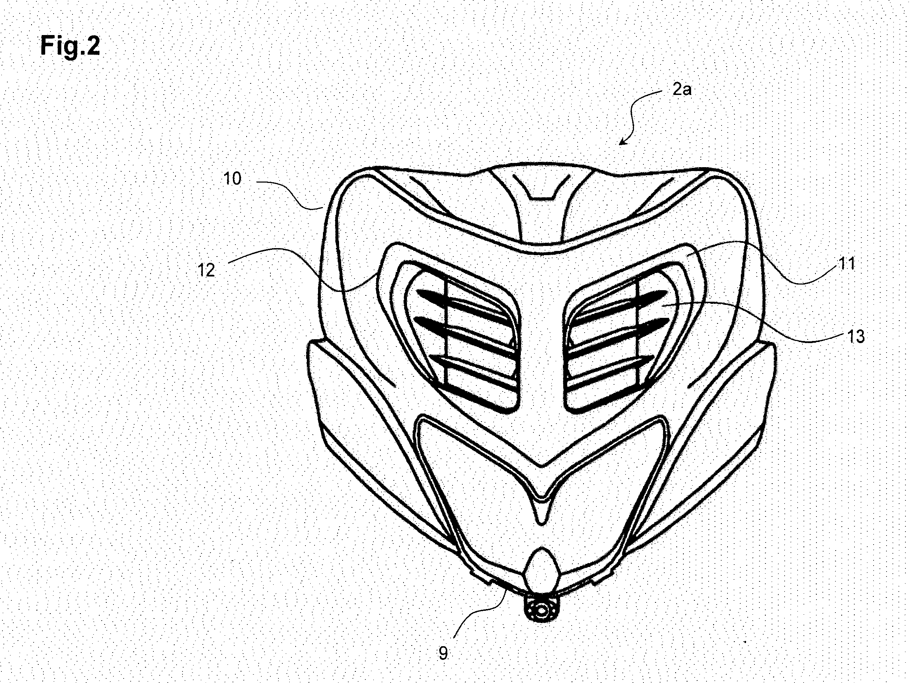

As can be seen in Figures 2 to 4, the headlight 9 is arranged in an opening formed in the lateral center of a bottom edge of the first front cover 10. The headlight 9 is thus installed at the lateral center of the scooter-type motorcycle 1, and at lowest, most forward location of the first front cover 10.

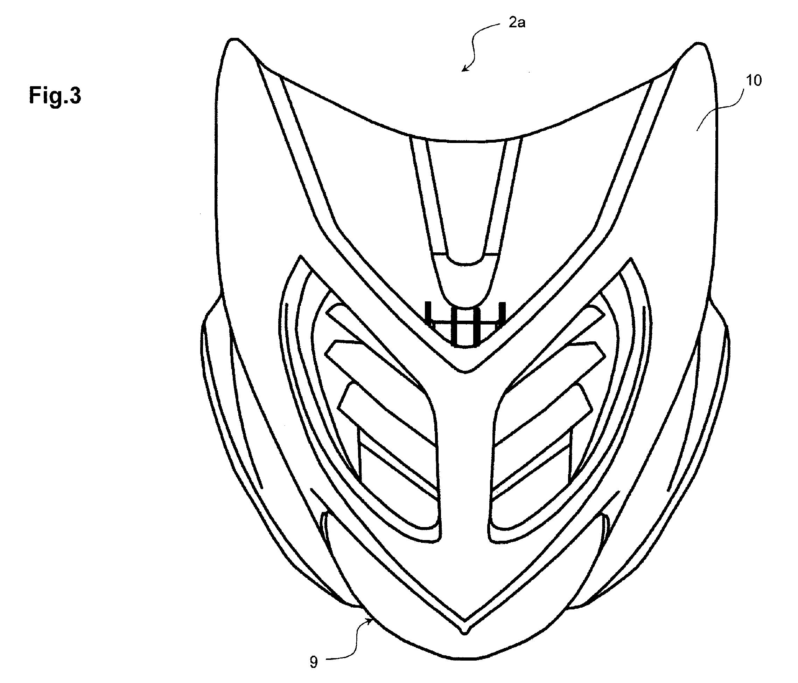

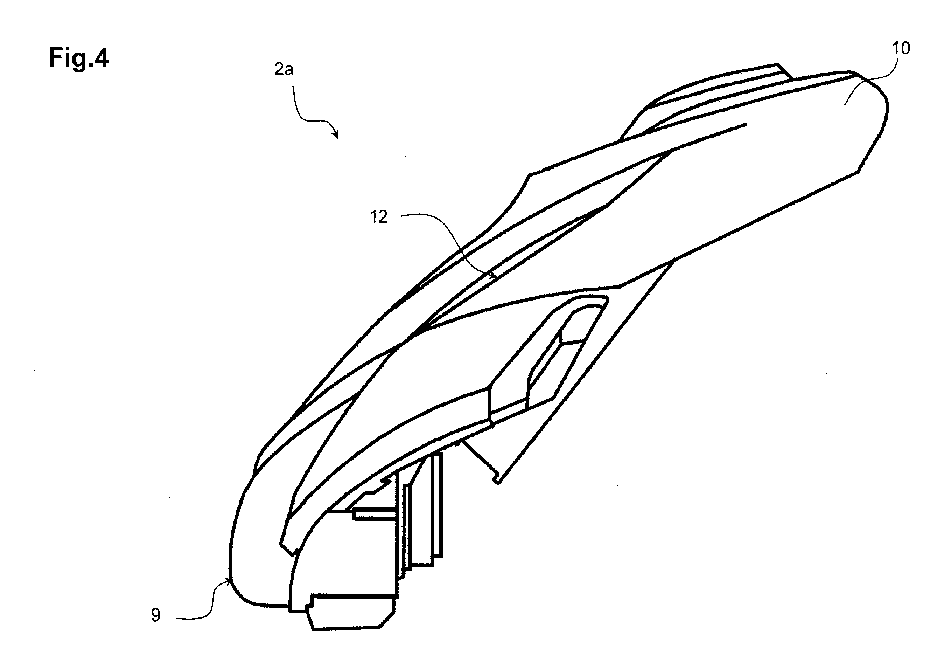

From Figure 4, it can be seen that the first front cover 10 extends upwards and rearwards from the headlight 9 in a generally curved contour. Specifically, when seen in a side view, the first front cover 10 initially extends in a direction closer to the vertical plane than the horizontal plane, then curves around towards the rear to extend in a direction closer to the horizontal plane than the vertical plane. As can be seen from Figure 3, the first front cover 10 also extends outwards and rearwards from the headlight 9 in a generally curved contour when seen in plan view.

Shoulder portions are formed on the bottom edge of the first front cover 10, on left and right lateral sides of the headlight 9. The shoulder portions have a generally protruding shape, projecting outwards and away from the main body of the first front cover 10. The inclined front, upper surfaces of the shoulder portions initially follow the contour of the inclined side edges of the headlight, before extending further outward and rearward.

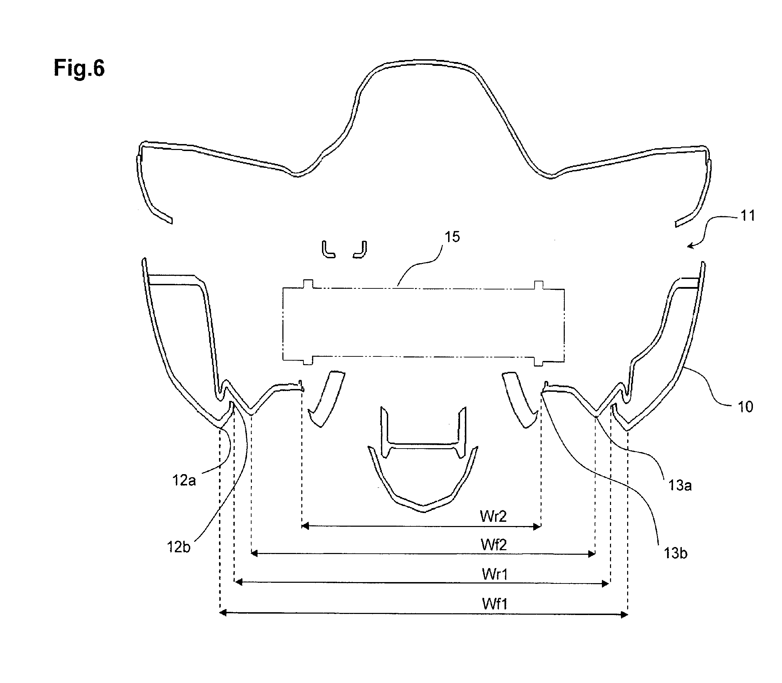

A first air inlet 12 is formed in the first front cover 10 above the headlight 9. Specifically, the first air inlet 12 comprises a first front opening 12a formed on the front surface of the first front cover 10, and a first rear opening 12b formed at a location rearwards of the first front opening 12a. In this embodiment of the present invention, the first front cover 10 comprises a single layer of resinous material having a front surface and a rear surface. Accordingly, the depth of the first air inlet 12 is created by inclining a section of the first front cover 10 that makes up the first air inlet 12 rearwards from the first front opening 12a so as to form first outer sidewalls that extend to the first rear opening 12b, as shown in Figure 6.

The first outer sidewalls extend rearward from the first front opening 12a to the first rear opening 12b with an inward incline. Accordingly, the width Wf1 of the first front opening 12a is greater than the width Wr1 of the first rear opening 12b in the lateral direction, and thus the opening area of the first front opening 12a is greater than the opening area of the first rear opening 12b when seen in a front view.

As shown in Figures 2, 3 and 6, the first front opening 12a comprises a pair of first left and right front openings disposed on the left and right lateral sides of the scooter-type motorcycle 1. These first left and right front openings are divided by a first center strut that extends rearwards at an upward incline from the horizontal plane, along the lateral center line of the scooter-type motorcycle 1. The first center strut is formed by the first front cover 10 extending from the center of the lower edge of the first front opening 12a to the center of its upper edge.

The lateral edges of the section of the first front cover 10 that forms the first center strut are inclined rearwards so as to form first inner sidewalls that extend to the first rear opening 12b, as shown in Figure 6. Accordingly, the first rear opening 12b also comprises a pair of first left and right rear openings disposed behind the first left and right front openings, respectively.

As can be seen in Figures 2, 3 and 6, the first inner sidewalls of the first left and right front openings extend rearward with an outward incline. Accordingly, the opening area of the first rear opening 12b is even further reduced in comparison to the opening area of the first front opening 12a.

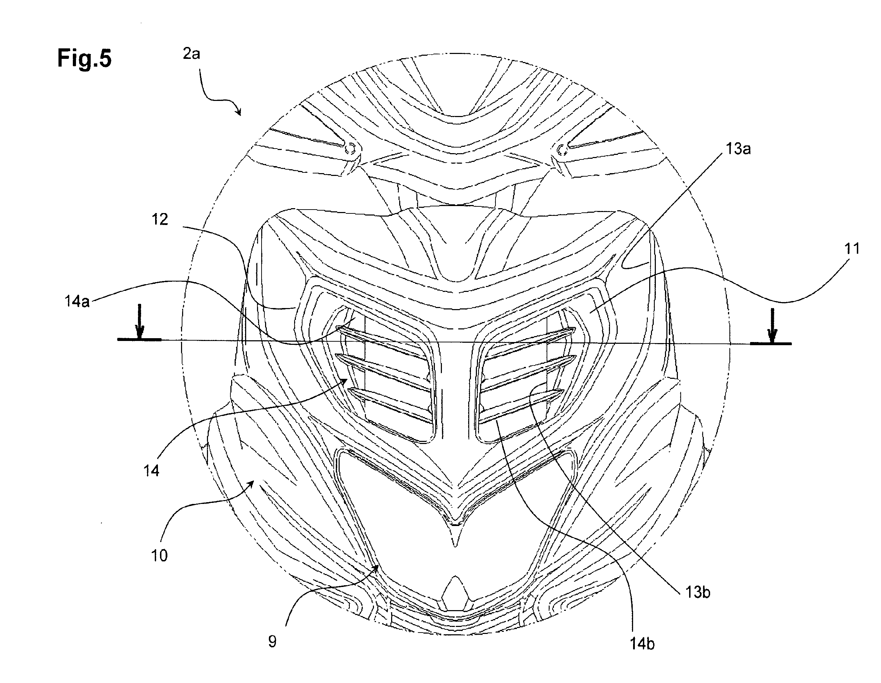

As shown in Figure 6, the second front cover 11 is formed rearward of the first front cover 10. The outline of the second front cover 11 generally follows the contour of the outline of the first front cover, apart from the lower edge thereof. Specifically, as shown in Figure 5, as the headlight 9 is arranged in the first front cover 10 and not the second front cover 11, the lower edge of the second front cover 11 extends in the lateral direction in a horizontal plane positioned above the main body of the headlight 9. Accordingly, the second front cover 11 is smaller than the first front cover 10.

A second air inlet 13 is formed in the second front cover 11, behind the first air inlet 12 of the first front cover and above the headlight 9. Specifically, similar to the first air inlet 12, the second inlet comprises a second front opening 13a formed on the front surface of the second front cover 11, and a second rear opening 13b formed at a location rearwards of the second front opening 13a. As was the case for the first front cover 10, the second front cover 11 comprises a single layer of resinous material having a front surface and a rear surface. Accordingly, the depth of the second air inlet 13 is created by inclining a section of the first front cover 10 that makes up the second air inlet 13 rearwards from the second front opening 13a so as to form a channel portion 14 that extends to the second rear opening 13b, as shown in Figure 6.

As shown in Figure 5, the channel portion 14 comprises second outer sidewalls 14a that extend rearward from the second front opening 13a to the second rear opening 13b with an inward incline. Accordingly, the width Wf2 of the second front opening 13a is greater than the width Wr2 of the second rear opening 13b in the lateral direction, and thus the opening area of the second front opening 13a is greater than the opening area of the second rear opening 13b when seen in a front view.

The angle at which the second outer sidewalls 14a are inclined is not constant and varies not only along the length of said sidewalls 14a, but also in their depth direction (longitudinal direction of the scooter-type motorcycle). Specifically, as can be seen from Figures 2 and 5, although the rear edges of the second outer sidewalls 14a that form the second rear opening 13b extend parallel to each other in the vertical plane, the front edges of said sidewalls 14a that form the second front opening 13a rather exhibit a generally convex contour.

Accordingly, the width of the second front opening 13a at a substantially center portion thereof, in the vertical plane, is greater than the width at the upper and lower edges thereof. Hence, the initial angle of incline of the second outer sidewalls 14a is steeper in the vicinity of the upper and lower edges of the second air inlet 13. In addition, as can be seen from Figures 2 and 5, the final angle of incline of the second outer sidewalls 14a is shallower along their entire lengths.

As shown in Figures 2, 3 and 6, the second front opening 13a comprises a pair of second left and right front openings disposed on the left and right lateral sides of the scooter-type motorcycle 1, behind the first left and right rear openings. These second left and right front openings are divided by a second center strut that follows the contour of the first center strut. As was the case for the first center strut, the second center strut is formed by the second front cover 11 extending from the center of the lower edge of the second front opening 13a to the center of its upper edge.

The lateral edges of the section of the second front cover 11 that forms the second center strut are inclined rearwards so as to extend to the second rear opening 13b, as shown in Figure 6. Accordingly, the second rear opening 13b also comprises a pair of second left and right rear openings disposed behind the second left and right front openings, respectively.

A channel portion grill 14b is formed in the channel portion 14 of the second air inlet 13. In this embodiment, the channel portion grill 14b comprises 6 grill fins (grill portions) that extend in the lateral direction. Specifically, 3 grill fins extend between the second outer sidewall 14a and the second inner sidewall on the left lateral side of the scooter-type motorcycle, and 3 grill fins extend between the second outer sidewall 14a and the second inner sidewall on the right lateral side of the scooter-type motorcycle. As can be seen from Figures 2 and 5, each grill fin extends from the second outer sidewall 14a towards the second inner sidewall with a slight downward incline from the horizontal plane. In addition, the angle of attack of each grill fin varies very slightly along its length, wherein the outer ends of the grill fins have a more neutral angle of attack than the inner ends. This is due not only to the fact that the outer ends of the grill fins are also positioned further back than the inner ends in the longitudinal direction of the scooter-type motorcycle, but also to the fact that cooling air flow over the outer ends of the grill fins has a greater interaction with the cooling air deflected by the second outer sidewalls 14a.

As shown in Figure 5, a radiator 15 (in-vehicle parts) is disposed behind the first and second front covers 10 and 11, and directly behind the second air inlet 13. Although not shown, the radiator 15 is positioned in front of the head pipe. Accordingly, cooling air can flow uninterrupted from the second air inlet 13 into the radiator 15, thus improving its cooling efficiency. In addition, the second rear opening 13b is wider than the operational portion of the radiator 15 in the lateral direction of the scooter-type motorcycle. Thus, the entire operational surface of the radiator 15 is exposed to the uninterrupted flow of cooling air.

Naturally, although the in-vehicle parts of this embodiment comprise a radiator 15, they could alternatively comprise a battery or fuel cell in the case of an electric scooter-type motorcycle.

As discussed above, the width Wf1 of the first front opening 12a is greater than the width Wr1 of the first rear opening 12b in the lateral direction. In addition, the width Wf2 of the second front opening 13a is also greater than the width Wr2 of the second rear opening 13b in the lateral direction. Moreover, as seen in Figure 6, the width Wr1 of the first rear opening 12b is greater than the width Wf2 of the second front opening 13a in the lateral direction. As a result, when seen in a front view, the opening area of the first front opening 12a is greater than the opening area of the first rear opening 12b which in turn is greater than the opening area of the second front opening 13a which in turn is greater than the opening area of the second rear opening 13b. Hence, the first air inlet 12 has a larger opening area than both the second front opening 13a and the second rear opening 13b.

According to the embodiment discussed above, a scooter-type motorcycle (straddle-type vehicle) of the present invention has a front cover assembly 2a comprising a first front cover 10 and a second front cover 11 disposed rearward of the first front cover 10; and a headlight 9 installed in the front cover assembly 2a; wherein a first air inlet 12 is formed in the first front cover 10; a second air inlet 13 is formed in the second front cover 11, the second air inlet 13 having a second front opening 13a and a second rear opening 13b for directing cooling air to in-vehicle parts; and when seen in a front view, the first air inlet 12 has a larger area than the second rear opening 13b.

By forming the first and second air inlets 12, 13 such that the first air inlet 12 has a larger opening area than the second rear opening 13b, the flow of cooling air accelerates between the time it enters the first air inlet 12 and the time it exits the second rear opening 13b of the second air inlet 13. Consequently, the flow velocity of the cooling air directed to the radiator 15 (in-vehicle parts) is increased, and thus, as the air flow over it is increased, the radiator 15 can be cooled more efficiently even though a headlight 9 is provided in the front cover assembly 2a.

In addition, as the first front cover 10 is arranged in front of the head pipe of the straddle-type vehicle 1 and the second front cover 11 is arranged between the first front cover 10 and the head pipe, the space behind the front cover assembly 2a is optimized for the present embodiment. Nevertheless, it is quite possible to achieve the object of the present invention with other arrangements between the head pipe and the first and second front covers 12 and 13. For example, the head pipe could be positioned between the first front cover 12 and the second front cover 13.

According to the embodiment of the present invention, the first air inlet 12 has a first front opening 12a and a first rear opening 12b, wherein the first front opening 12a has a larger area than the first rear opening 12b, the first rear opening 12b has a larger area than the second front opening 13a, and the second front opening 13a has a larger area than the second rear opening 13b. Hence, the acceleration of the cooling air flow starts to occur within the first air inlet 12, continues as the cooling air flows from the first air inlet 12 to the second air inlet 13, and can continue to occur up until the cooling air flows out of the second air inlet 13.

Nevertheless, it is quite possible to achieve the object of the present invention with other ratios between the intermediate opening areas, as long as the first front opening 12a has a larger area than the second rear opening 12b. For example, the first front opening 12a could have the same opening area as the first rear opening 12b, the first rear opening 12b could have the same opening area as the second front opening 13a, the second front opening 13a could have the same opening area as the second rear opening 13b, etc.

According to the present embodiment, the larger areas are due to the openings 12a, 12b, 13a being wider in the lateral direction and vertical direction. Thus, not only is the cooling air accelerated by being deflected in the lateral direction, it is also accelerated by being deflected in the vertical direction. However, the larger areas could also be due to the openings 12a, 12b, 13a being only wider in the lateral direction, or being only wider in the vertical direction.

According to the embodiment discussed above, the second air inlet 13 comprises a channel portion 14 extending from the second front opening 13a to the second rear opening 13b, wherein the channel portion 14 comprises sidewalls 14a, which are angled inward from the second front opening 13a to the second rear opening 13b. Thus, in the present embodiment, the cooling air flow accelerates along the entire length of the second air inlet 13, and is directed in a lateral direction and focused towards the lateral center of the straddle-type vehicle 1. Naturally, the sidewalls of the channel portion 14 could be provided on upper and lower surfaces of the second air inlet 13 in addition or as an alternative to the sidewalls 14a of the present embodiment.

Moreover, the channel portion 14 of the embodiment discussed above further comprises a channel portion grill 14b having six grill fins that extend in a lateral direction across the second air inlet 13, inclined downward towards the centre of the straddle-type vehicle 1. Hence, any debris found in the cooling air flow can be prevented from entering the front cover assembly 2a and damaging the radiator 15. Of course, the orientation and number of the grill fins of the channel portion grill is not limited to that as disclosed in the present embodiment, and it is quite possible to have a single grill portion extending in a vertical direction, for example.

According to the present embodiment, the grill fins 14b further extend in a longitudinal direction of the straddle-type vehicle 1, and part of the grill fins 14b incline downwards towards the rear from the horizontal plane. Accordingly, the cooling air flow can be accurately deflected towards the radiator 15 to further improve the cooling efficiency of the radiator 15. Naturally, if the radiator 15 or in-vehicle parts are located at a different position to that as described for the present embodiment, the incline of the grill fins 14b would be adjusted accordingly.

According to the embodiment discussed above, the headlight 9 is installed in the first front cover 10. As such, the second front cover 13 does not need to be configured to further contain the headlight 9, and thus it can be produced with a smaller size. Hence, the material costs for manufacturing the second front cover 13 are reduced.

According to the present embodiment, the radiator 15 is arranged within the front cover assembly 2a, behind the first and second air inlets 12, 13 and in front of the head pipe, and the second rear opening 13b is wider than the radiator 15 in the lateral direction. Accordingly, not only can the radiator 15 of the straddle-type vehicle 1 be efficiently cooled whilst utilizing the optimized space within the front cover assembly 2a, the cooling efficiency of the radiator 15 is further improved by the fact that the radiator 15 is exposed to the flow of cooling air across its entire width.

According to the embodiment discussed above, the first front opening 12a comprises a pair of first left and right front openings 12a, 12a disposed on the left and right lateral sides of the straddle-type vehicle 1; and the first rear opening 12b comprises a pair of first left and right rear openings 12b, 12b disposed on the left and right lateral sides of the straddle-type vehicle 1, behind the first left and right front openings 12a, 12a, respectively. Moreover, the second front opening 13a comprises a pair of second left and right front openings 13a, 13a disposed on the left and right lateral sides of the straddle-type vehicle 1; and the second rear opening 13b comprises a pair of second left and right rear openings 13b, 13b disposed on the left and right lateral sides of the straddle-type vehicle 1, behind the second left and right front openings 13a, 13a, respectively.

Hence, both the first and second air inlets 12 and 13 can be provided with a sufficient opening area, without structurally weakening either the first front cover 10 or the second front cover 11. Naturally, the present invention is not restricted to this particular orientation and number of the openings 12a, 12b, 13a, 13b, and it would be quite possible for these openings to each comprise a single opening, or upper and lower openings, or upper left, upper right, lower left and lower right openings, etc.

## Claims

1. Straddle-type vehicle (1) comprising:
a front cover assembly (2a) comprising a first front cover (10) and a second front cover (11) disposed rearward of the first front cover (10); and
a headlight (9) installed in the first front cover (10);
wherein a first air inlet (12) is formed in the first front cover (10), the first air inlet (12) having a first front opening (12a) and a first rear opening (12b); and
a second air inlet (13) is formed in the second front cover (11), the second air inlet (13) having a second front opening (13a) and a second rear opening (13b) for directing cooling air to in-vehicle parts;
**characterized in that**
when seen in a front view, the first front opening (12a) has a larger opening area than the second rear opening (13b).

2. Straddle-type vehicle (1) according to claim 1, the straddle-type vehicle (1) further comprising a head pipe, wherein the first front cover (10) is preferably arranged in front of the head pipe and the second front cover (11) is preferably arranged between the first front cover (10) and the head pipe.

3. Straddle-type vehicle (1) according to claim 1 or 2, wherein the first front opening (12a) has a larger area than the first rear opening (12b).

4. Straddle-type vehicle (1) according to claim 3, wherein the first rear opening (12b) has a larger area than the second front opening (13a).

5. Straddle-type vehicle (1) according to any one of claims 1 to 4, wherein the second front opening (13a) has a larger area than the second rear opening (13b).

6. Straddle-type vehicle (1) according to any one of claims 1 to 5, wherein the larger areas are due to the openings (12a, 12b, 13a) being wider in the lateral direction and/or vertical direction.

7. Straddle-type vehicle (1) according to any one of claims 1 to 5, wherein the second air inlet (13) comprises a channel portion (14) extending from the second front opening (13a) to the second rear opening (13b).

8. Straddle-type vehicle (1) according to claim 6, wherein the channel portion (14) comprises sidewalls (14a) that are angled inward from the second front opening (13a) to the second rear opening (13b).

9. Straddle-type vehicle (1) according to claim 6 or 7, wherein the channel portion (14) further comprises a channel portion grill (14b) having at least one grill fin (14b) extending in a lateral direction across the second air inlet (13), preferably inclined downward towards the centre of the straddle-type vehicle (1).

10. Straddle-type vehicle (1) according to claim 9, wherein the at least one grill fin (14b) further extends in a longitudinal direction of the straddle-type vehicle (1), and at least part of the at least one grill fin (14b) is inclined downwards towards the rear from the horizontal plane.

11. Straddle-type vehicle (1) according to any one of claims 1 to 10, wherein the in-vehicle parts comprise a radiator (15) arranged within the front cover assembly (2a), behind the first and second air inlets (12, 13) and preferably in front of the head pipe.

12. Straddle-type vehicle (1) according to claim 11, wherein the second rear opening (13b) is wider than the radiator (15) in the lateral direction.

13. Straddle-type vehicle (1) according to any one of claims 1 to 12, wherein the first front opening (12a) comprises a pair of first left and right front openings (12a, 12a) disposed on the left and right lateral sides of the straddle-type vehicle (1); and the first rear opening (12b) comprises a pair of first left and right rear openings (12b, 12b) disposed on the left and right lateral sides of the straddle-type vehicle (1), behind the first left and right front openings (12a, 12a), respectively.

14. Straddle-type vehicle (1) according to any one of claims 1 to 13, wherein the second front opening (13a) comprises a pair of second left and right front openings (13a, 13a) disposed on the left and right lateral sides of the straddle-type vehicle (1); and the second rear opening (13b) comprises a pair of second left and right rear openings (13b, 13b) disposed on the left and right lateral sides of the straddle-type vehicle (1), behind the second left and right front openings (13a, 13a), respectively.

## Patentansprüche

1. Spreizsitzfahrzeug (1), das umfasst:
eine Frontverkleidungs-Anordnung (2a), die eine erste Frontverkleidung (10) und eine hinter der ersten Frontverkleidung (10) angeordnete zweite Frontverkleidung (11) umfasst; und
einen Scheinwerfer (9), der in der ersten Frontverkleidung (10) installiert ist;
wobei ein erster Lufteinlass (12) in der ersten Frontverkleidung (10) ausgebildet ist und der erste Lufteinlass (12) eine erste vordere Öffnung (12a) sowie eine erste hintere Öffnung (12b) hat; und
ein zweiter Lufteinlass (13) in der zweiten Frontverkleidung (11) ausgebildet ist und der zweite Lufteinlass (13) eine zweite vordere Öffnung (13a) sowie eine zweite hintere Öffnung (12b) zum Leiten von Kühlluft zu Fahrzeug-Innenteilen aufweist;
**dadurch gekennzeichnet, dass** die erste vordere Öffnung (12a), in einer Vorderansicht gesehen, eine größere Öffnungsfläche hat als die zweite hintere Öffnung (13b).

2. Spreizsitzfahrzeug (1) nach Anspruch 1, wobei das Spreizsitzfahrzeug (1) des Weiteren ein Steuerrohr umfasst und die erste Frontverkleidung (10) vorzugsweise vor dem Steuerrohr angeordnet ist und die zweite Frontverkleidung (11) vorzugsweise zwischen der ersten Frontverkleidung (10) und dem Steuerrohr angeordnet ist.

3. Spreizsitzfahrzeug (1) nach Anspruch 1 oder 2, wobei die erste vordere Öffnung (12a) eine größere Fläche hat als die erste hintere Öffnung (12b).

4. Spreizsitzfahrzeug (1) nach Anspruch 3, wobei die erste hintere Öffnung (12b) eine größere Fläche hat als die zweite vordere Öffnung (13a).

5. Spreizsitzfahrzeug (1) nach einem der Ansprüche 1 bis 4, wobei die zweite vordere Öffnung (13a) eine größere Fläche hat als die zweite hintere Öffnung (13b).

6. Spreizsitzfahrzeug (1) nach einem der Ansprüche 1 bis 5, wobei die größeren Flächen darauf zurückzuführen sind, dass die Öffnungen (12a, 12b, 13a) in der Querrichtung und/oder der vertikalen Richtung größer sind.

7. Spreizsitzfahrzeug (1) nach einem der Ansprüche 1 bis 5, wobei der zweite Lufteinlass (13) einen Kanalabschnitt (14) umfasst, der sich von der zweiten vorderen Öffnung (13a) zu der zweiten hinteren Öffnung (13b) erstreckt.

8. Spreizsitzfahrzeug (1) nach Anspruch 6, wobei der Kanalabschnitt (14) Seitenwände (14a) umfasst, die von der zweiten vorderen Öffnung (13a) zu der zweiten hinteren Öffnung (13b) nach innen geneigt sind.

9. Spreizsitzfahrzeug (1) nach Anspruch 6 oder 7, wobei der Kanalabschnitt (14) des Weiteren ein Kanalabschnitt-Gitter (14b) umfasst, das wenigstens eine Gitterrippe (14b) aufweist, die sich in einer Querrichtung über den zweiten Lufteinlass (13), vorzugsweise schräg nach unten auf die Mitte des Spreizsitzfahrzeugs (1) zu, erstreckt.

10. Spreizsitzfahrzeug (1) nach Anspruch 9, wobei sich die wenigstens eine Gitterrippe (14b) des Weiteren in einer Längsrichtung des Spreizsitzfahrzeugs (1) erstreckt und wenigstens ein Teil der wenigstens einen Gitterrippe (14b) aus der horizontalen Ebene zur Rückseite hin nach unten geneigt ist.

11. Spreizsitzfahrzeug (1) nach einem der Ansprüche 1 bis 10, wobei die Fahrzeug-Innenteile einen Kühler (15) umfassen, der im Inneren der Frontverkleidungsanordnung (2a) hinter dem ersten und dem zweiten Lufteinlass (12, 13) und vorzugsweise vor dem Steuerrohr angeordnet ist.

12. Spreizsitzfahrzeug (1) nach Anspruch 11, wobei die zweite hintere Öffnung (13b) in der Querrichtung größer ist als der Kühler (15).

13. Spreizsitzfahrzeug (1) nach einem der Ansprüche 1 bis 12, wobei die erste vordere Öffnung (12a) ein Paar aus einer ersten linken und einer ersten rechten vorderen Öffnung (12a, 12a) umfasst, die an der linken und der rechten Längsseite des Spreizsitzfahrzeugs (1) angeordnet sind, und die erste hintere Öffnung (12b) ein Paar aus einer ersten linken und einer ersten rechten hinteren Öffnung (12b, 12b) umfasst, die an der linken und der ersten rechten Längsseite des Spreizsitzfahrzeugs (1) hinter der ersten linken bzw. der ersten rechten vorderen Öffnung (12a, 12a) angeordnet sind.

14. Spreizsitzfahrzeug (1) nach einem der Ansprüche 1 bis 13, wobei die zweite vordere Öffnung (13a) ein Paar aus einer zweiten linken und einer zweiten rechten vorderen Öffnung (13a, 13a) umfasst, die an der linken und der rechten Längsseite des Spreizsitzfahrzeugs (1) angeordnet sind, und die zweite hintere Öffnung (13b) ein Paar aus einer zweiten linken und einer zweiten rechten hinteren Öffnung (13b, 13b) umfasst, die an der linken und der rechten Längsseite des Spreizsitzfahrzeugs (1) hinter der zweiten linken bzw. der zweiten rechten vorderen Öffnung (13a, 13a) angeordnet sind.

## Revendications

1. Véhicule de type à enfourcher (1), comprenant :
un assemblage de carénage avant (2a) comprenant un premier carénage avant (10) et un deuxième carénage avant (11) agencé arrière le premier carénage avant (10) ; et
un phare (9) installé dans le premier carénage avant (10) ;
dans lequel une première entrée d'air (12) est formée dans le premier carénage avant (10), la première entrée d'air (12) ayant une première ouverture avant (12a) et une première ouverture arrière (12b) ; et
une deuxième entrée d'air (13) est formée dans le deuxième carénage avant (11), la deuxième entrée d'air (13) ayant une deuxième ouverture avant (13a) et une deuxième ouverture arrière (13b) pour diriger de l'air de refroidissement vers des pièces internes du véhicule ;
**caractérisé en ce que**
en vue de face, la première ouverture avant (12a) présente une surface d'ouverture plus grande que la deuxième ouverture arrière (13b).

2. Véhicule de type à enfourcher (1) selon la revendication 1, le véhicule de type à enfourcher (1) comprenant en outre un tube de tête, dans lequel le premier carénage avant (10) est de préférence agencé devant le tube de tête et le deuxième carénage avant (11) est de préférence agencé entre le premier carénage avant (10) et le tube de tête.

3. Véhicule de type à enfourcher (1) selon la revendication 1 ou 2, dans lequel la première ouverture avant (12a) présente une surface plus grande que la première ouverture arrière (12b).

4. Véhicule de type à enfourcher (1) selon la revendication 3, dans lequel la première ouverture arrière (12b) présente une surface plus grande que la deuxième ouverture avant (13a).

5. Véhicule de type à enfourcher (1) selon l'une quelconque des revendications 1 à 4, dans lequel la deuxième ouverture avant (13a) présente une surface plus grande que la deuxième ouverture arrière (13b).

6. Véhicule de type à enfourcher (1) selon l'une quelconque des revendications 1 à 5, dans lequel les surfaces plus grandes proviennent du fait que les ouvertures (12a, 12b, 13a) sont plus larges en direction latérale et/ou en direction verticale.

7. Véhicule de type à enfourcher (1) selon l'une quelconque des revendications 1 à 5, dans lequel la deuxième entrée d'air (13) comprend une portion de canal (14) qui s'étend de la deuxième ouverture avant (13a) à la deuxième ouverture arrière (13b).

8. Véhicule de type à enfourcher (1) selon la revendication 6, dans lequel la portion de canal (14) comprend des parois latérales (14a) qui sont inclinées vers l'intérieur de la deuxième ouverture avant (13a) vers la deuxième ouverture arrière (13b).

9. Véhicule de type à enfourcher (1) selon la revendication 6 ou 7, dans lequel la portion de canal (14) comprend en outre une grille de portion de canal (14b) comportant au moins une ailette de grille (14b) qui s'étend en direction latérale en travers de la deuxième entrée d'air (13), inclinée de préférence vers le bas et vers le centre du véhicule de type à enfourcher (1).

10. Véhicule de type à enfourcher (1) selon la revendication 9, dans lequel ladite au moins une ailette de grille (14b) s'étend plus loin en direction longitudinale du véhicule de type à enfourcher (1), et au moins une partie de ladite au moins une ailette de grille (14b) est inclinée vers le bas et vers l'arrière à partir du plan horizontal.

11. Véhicule de type à enfourcher (1) selon l'une quelconque des revendications 1 à 10, dans lequel les pièces internes du véhicule comprennent un radiateur (15) agencé dans l'assemblage de carénage avant (2a), derrière les première et deuxième entrées d'air (12, 13) et de préférence devant le tube de tête.

12. Véhicule de type à enfourcher (1) selon la revendication 11, dans lequel la deuxième ouverture arrière (13b) est plus large que le radiateur (15) en direction latérale.

13. Véhicule de type à enfourcher (1) selon l'une quelconque des revendications 1 à 12, dans lequel la première ouverture avant (12a) comprend une paire de premières ouvertures avant gauche et droite (12a, 12a) agencées sur les côtés latéraux gauche et droit du véhicule de type à enfourcher (1) ; et la première ouverture arrière (12b) comprend une paire de premières ouvertures arrière gauche et droite (12b, 12b) agencées sur les côtés latéraux gauche et droit du véhicule de type à enfourcher (1), respectivement derrière les premières ouvertures avant gauche et droite (12a, 12a).

14. Véhicule de type à enfourcher (1) selon l'une quelconque des revendications 1 à 13, dans lequel la deuxième ouverture avant (13a) comprend une paire de deuxièmes ouvertures avant gauche et droite (13a, 13a) agencées sur les côtés latéraux gauche et droit du véhicule de type à enfourcher (1) ; et la deuxième ouverture arrière (13b) comprend une paire de deuxièmes ouvertures arrière gauche et droite (13b, 13b) agencées sur les côtés latéraux gauche et droit du véhicule de type à enfourcher (1), respectivement derrière les deuxièmes ouvertures avant gauche et droite (13a, 13a).
